# EUROPEAN PATENT APPLICATION

(11) **EP 2 079 206 A2**
(43) Date of publication of application: **15.07.2009**
(21) Application number: 08253046.0
(22) Date of filing: 17.09.2008
(51) Int. Cl.: H04L 12/56

(54) **Network system, network administration apparatus, communication apparatus, path setting method and program**

(30) Priority: 21.09.2007 JP 2007245186
(71) Applicant: NEC Corporation, Minato-ku Tokyo 108 (JP)
(72) Inventor: Matsumoto, Takehiko, Minato-ku Tokyo (JP); Funasaki, Tomoshige, Minato-ku Tokyo (JP)
(74) Representative: MacDougall, Alan John Shaw

(57) **Abstract**

The present invention provides a network system, a network administration apparatus, a communication apparatus, a path setting method and a program that can set a path by autonomous distributed control through an autonomous distributed control non-adaptive apparatus in a network including both an autonomous distributed control adaptive apparatus and the autonomous distributed control non-adaptive apparatus. For this purpose, a network system according to the present invention includes both an autonomous distributed control adaptive network and an autonomous distributed control non-adaptive network, and includes a network administration apparatus that can set predetermined paths in the autonomous distributed control adaptive network and the autonomous distributed control non-adaptive network, wherein the network administration apparatus has a function of setting an autonomous distributed control non-adaptive path as part of an autonomous distributed control adaptive path based on information indicating the autonomous distributed control non-adaptive path being set in the autonomous distributed control non-adaptive network.

## Description

This application is based upon and claims the benefit of priority from Japanese patent application No. 2007-245186, filed on September 21, 2007, the disclosure of which is incorporated herein in its entirety by reference.

### BACKGROUND OF THE INVENTION

### Field of the Invention

The present invention relates to a network system, a network administration apparatus, a communication apparatus, a path setting method and a program that can set a path by autonomous distributed control in an environment including both communication apparatuses being adapted to the autonomous distributed control and communication apparatuses not being adapted to the autonomous distributed control.

### Description of Related Art

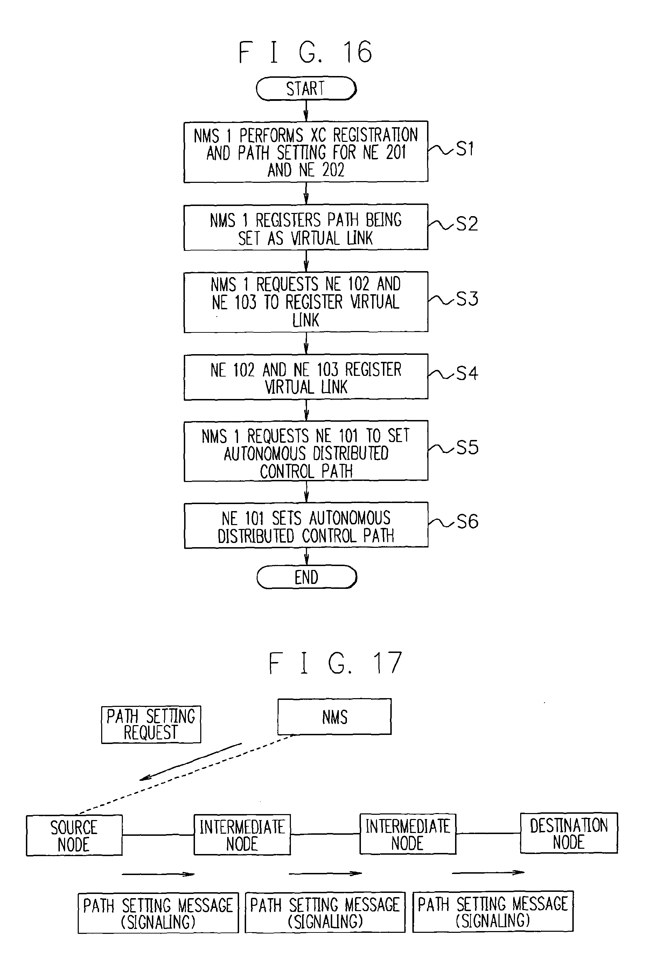

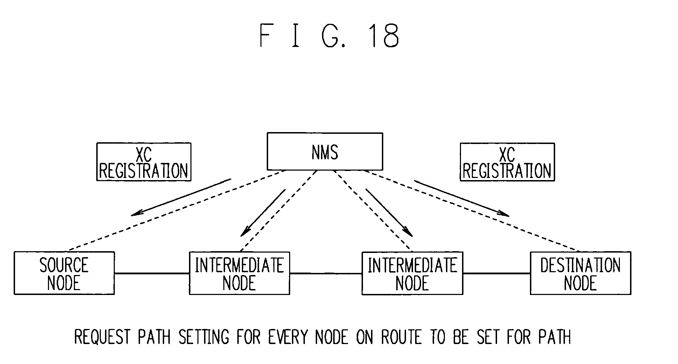

Fig. 17 shows an example of a path setting and administration system through autonomous distributed control such as GMPLS (General Multi-Protocol Label Switching) or ASON (Automatically Switched Optical Network). Fig. 18 shows an example of a path setting and administration system through central control by a network management system (hereinafter, referred to as an NMS). The system shown in Fig. 17 has merits of reducing the operation cost, flexibly selecting a path route and providing failure recovery means, compared to the system shown in Fig. 18.

However, a network including both communication apparatuses being adapted to the autonomous distributed control (hereinafter, referred to as autonomous distributed control adaptive apparatuses) and communication apparatuses not being adapted to the autonomous distributed control (autonomous distributed control non-adaptive apparatuses) (for example, see Japanese Patent Application Laid Open No. 2006-352297) has the following problems.

A first problem is that in adapting a large-scale network in operation to the autonomous distributed control, the network cannot smoothly transit to an autonomous distributed control adaptive network since it is difficult to adapt all communication apparatuses to the autonomous distributed control in a short period of time.

A second problem is that an autonomous distributed control non-adaptive apparatus does not have a mechanism for processing an autonomous distributed control signaling message or a mechanism for advertising a link of the apparatus, so that it cannot set a path by the autonomous distributed control through an autonomous distributed control non-adaptive apparatus and hence it cannot receive a benefit of path setting through the autonomous distributed control in the network including both autonomous distributed control adaptive apparatuses and autonomous distributed control non-adaptive apparatuses.

### SUMMARY

In view of the above circumstances, it is an exemplary object of an embodiment to provide a network system, a network administration apparatus, a communication apparatus, a path setting method and a program that can set a path by autonomous distributed control through an autonomous distributed control non-adaptive apparatus in a network including both an autonomous distributed control adaptive apparatus and an autonomous distributed control non-adaptive apparatus.

To achieve the above exemplary object, the embodiments have the following features.

### <Network System>

A first exemplary aspect of a network system according to the present invention includes both an autonomous distributed control adaptive network and an autonomous distributed control non-adaptive network, and includes a network administration apparatus that can set predetermined paths in the autonomous distributed control adaptive network and the autonomous distributed control non-adaptive network, wherein the network administration apparatus sets an autonomous distributed control non-adaptive path as part of an autonomous distributed control adaptive path based on information indicating the autonomous distributed control non-adaptive path being set in the autonomous distributed control non-adaptive network.

A second exemplary aspect of a network system according to the present invention includes both an autonomous distributed control adaptive network and an autonomous distributed control non-adaptive network, and includes a network administration apparatus that can set predetermined paths in the autonomous distributed control adaptive network and the autonomous distributed control non-adaptive network, wherein the network administration apparatus sets an autonomous distributed control adaptive path as part of an autonomous distributed control non-adaptive path based on information indicating the autonomous distributed control adaptive path being set in the autonomous distributed control adaptive network.

### <Network Administration Apparatus>

A first exemplary aspect of a network administration apparatus according to the present invention sets an autonomous distributed control non-adaptive path as part of an autonomous distributed control adaptive path based on information indicating the autonomous distributed control non-adaptive path being set in an autonomous distributed control non-adaptive network if there are both an autonomous distributed control adaptive network and the autonomous distributed control non-adaptive network.

A second exemplary aspect of a network administration apparatus according to the present invention sets an autonomous distributed control adaptive path as part of an autonomous distributed control non-adaptive path based on information indicating the autonomous distributed control adaptive path being set in an autonomous distributed control adaptive network if there are both an autonomous distributed control adaptive network and the autonomous distributed control non-adaptive network.

### <Communication Apparatus>

A first exemplary aspect of a communication apparatus according to the present invention is a communication apparatus being arranged in an autonomous distributed control adaptive network and adapted to autonomous distributed control, including: a virtual link registration unit that is requested by a network administration apparatus to register an autonomous distributed control non-adaptive path being set in an autonomous distributed control non-adaptive network as a virtual link, and, when receiving virtual link information indicating the virtual link, that registers the autonomous distributed control non-adaptive path as the virtual link based on the virtual link information; and an autonomous distributed control adaptive path setting unit that sets an autonomous distributed control adaptive path containing the virtual link, when requested by the network administration apparatus to set an autonomous distributed control adaptive path.

A second exemplary aspect of a communication apparatus according to the present invention is a communication apparatus being arranged in an autonomous distributed control non-adaptive network and not adapted to autonomous distributed control, including: a virtual link registration unit that is requested by a network administration apparatus to register an autonomous distributed control adaptive path being set in an autonomous distributed control adaptive network as a virtual link, and, when receiving virtual link information indicating the virtual link, that registers the autonomous distributed control adaptive path as the virtual link based on the virtual link information; and an autonomous distributed control non-adaptive path setting unit that sets an autonomous distributed control non-adaptive path containing the virtual link, when requested by the network administration apparatus to set an autonomous distributed control non-adaptive path.

### <Path Setting Method>

A first exemplary aspect of a path setting method according to the present invention sets an autonomous distributed control non-adaptive path as part of an autonomous distributed control adaptive path based on information indicating the autonomous distributed control non-adaptive path being set in an autonomous distributed control non-adaptive network if there are both an autonomous distributed control adaptive network and the autonomous distributed control non-adaptive network.

A second exemplary aspect of a path setting method according to the present invention sets an autonomous distributed control adaptive path as part of an autonomous distributed control non-adaptive path based on information indicating the autonomous distributed control adaptive path being set in an autonomous distributed control adaptive network if there are both an autonomous distributed control adaptive network and the autonomous distributed control non-adaptive network.

A third exemplary aspect of a path setting method according to the present invention includes: a step of being requested by a network administration apparatus to register an autonomous distributed control non-adaptive path being set in an autonomous distributed control non-adaptive network as a virtual link, and if virtual link information indicating the virtual link is received, registering the autonomous distributed control non-adaptive path as the virtual link based on the virtual link information; and a step of setting an autonomous distributed control adaptive path containing the virtual link if it is requested by the network administration apparatus to set an autonomous distributed control adaptive path.

A fourth exemplary aspect of a path setting method according to the present invention includes: a step of being requested by a network administration apparatus to register an autonomous distributed control adaptive path being set in an autonomous distributed control adaptive network as a virtual link, and if virtual link information indicating the virtual link is received, registering the autonomous distributed control adaptive path as the virtual link based on the virtual link information; and a step of setting an autonomous distributed control non-adaptive path containing the virtual link if it is requested by the network administration apparatus to set an autonomous distributed control non-adaptive path.

### <Program>

A program according to the present invention causes a computer to execute any of the first to fourth exemplary aspects of the path setting method according to the present invention.

### BRIEF DESCRIPTION OF THE DRAWINGS

The exemplary objects and features of the present invention will become more apparent from the consideration of the following detailed description taken in conjunction with the accompanying drawings, in which:
Fig. 1 is a diagram showing the configuration of a network system according to a first exemplary embodiment of the present invention;
Fig. 2 is a diagram showing a detailed example of configuration of links and labels;
Fig. 3 is a block diagram showing the functional configuration of autonomous distributed control adaptive apparatuses;
Fig. 4 is a block diagram showing the functional configuration of an NMS;
Fig. 5 is a diagram showing an example of XC registration;
Fig. 6 is a diagram showing an example of virtual link registration;
Fig. 7 is a diagram showing a virtual link (NMS) administration table;
Fig. 8 is a diagram showing information in an NE 102;
Fig. 9 is a diagram showing the configuration of a network that is recognized by an autonomous distributed control adaptive apparatus after a virtual link (VL 401) is registered;
Fig. 10 is a diagram showing the configuration of a network with a network management system according to a second exemplary embodiment of the present invention;
Fig. 11 is a diagram showing an example of the XC registration;
Fig. 12 is a diagram showing an example of the virtual link registration;
Fig. 13 is a diagram showing information in the NMS;
Fig. 14 is a diagram showing information in the NE 102;
Fig. 15 is a diagram showing the configuration of a network that is recognized by an autonomous distributed control adaptive apparatus after a virtual link (VL 402) is registered;
Fig. 16 is a flowchart showing an operation in the network system according to the first exemplary embodiment of the present invention;
Fig. 17 is a diagram showing one example of a network comprising communication apparatuses being adapted to autonomous distributed control; and
Fig. 18 is a diagram showing one example of a network comprising communication apparatuses not being adapted to autonomous distributed control.

### EXEMPLARY EMBODIMENT

The following will describe the best mode to carry out the present invention in detail with reference to the attached drawings.

The overview of an exemplary embodiment of the present invention will be described.

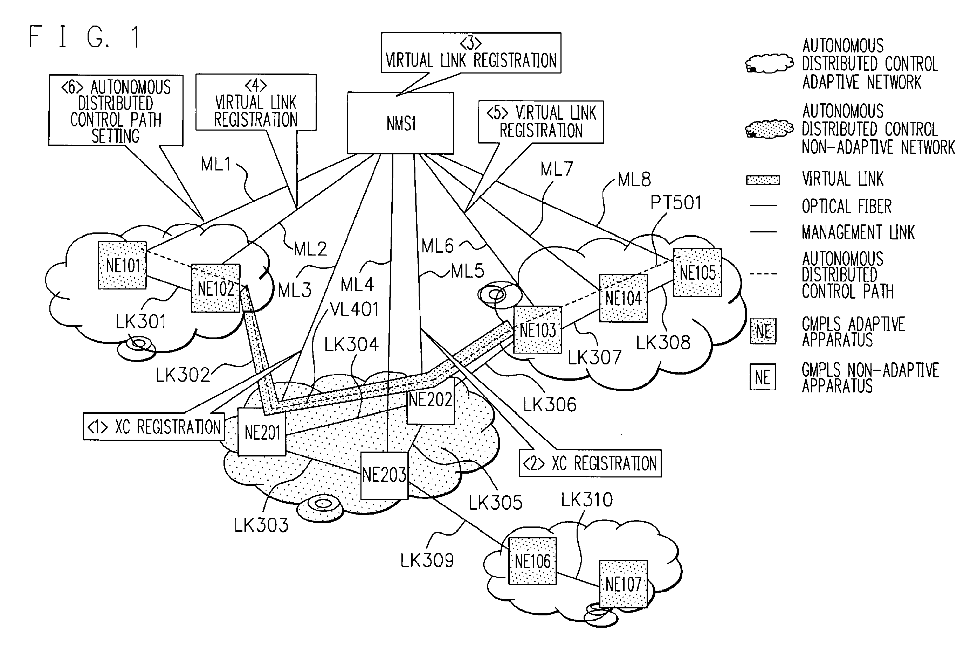

The exemplary embodiment of the present invention is characterized by enabling path setting through the autonomous distributed control in a network including both autonomous distributed control adaptive apparatuses, such as the GMPLS and ASON, and autonomous distributed control non-adaptive apparatuses. In Fig. 1, an NMS 1 includes a mechanism for handling paths being set (NE 201 - NE 202) as virtual links (NE 102 - NE 201 - NE 202 - NE 103), for example. The NMS can be called a network administration apparatus, while an autonomous distributed control adaptive apparatus and an autonomous distributed control non-adaptive apparatus can be called communication apparatuses. The autonomous distributed control adaptive apparatus includes a mechanism for handling the virtual links as normal links. In this way, according to the exemplary embodiment of the present invention, in the network including both autonomous distributed control adaptive apparatuses and autonomous distributed control non-adaptive apparatuses, paths (NE 101 - NE 102 - NE 201 - NE 202 - NE 103 - NE 104 - NE 105) can be set by the autonomous distributed control through the autonomous distributed control non-adaptive apparatus, for example.

### [First Exemplary Embodiment]

Fig. 1 shows the configuration of an exemplary embodiment of a network system according to the present invention. In the network that is assumed in this exemplary embodiment, a technique such as packet, TDM (Time Division Multiplexing) or WDM (Wavelength Division Multiplexing) provide an end-to-end path. Examples of the network that is assumed in this exemplary embodiment include an optical transmission network comprising SONET/SDH or WDM apparatuses or the like, and a connection oriented network for starting communication by setting a path. The "path setting" herein means reserving a time slot or wavelength on a route of a path to be set. A time slot or wavelength is referred to as a "label" herein.

In Fig. 1, each of the communication apparatuses (nodes) NEs 201 to 203 and NEs 101 to 107 performs Cross Connect (hereinafter, referred to as XC) or switching based on information of a label (time slot or wavelength, for example). The respective communication apparatuses are connected to one another by one or more links (optical fibers) LKs 301 to 310. The respective communication apparatuses and the NMS 1 are connected to each other by management links MLs 1 to 8.

In Fig. 1, the NEs 101 to 107 are GMPLS adaptive apparatuses (hereinafter, referred to as communication apparatuses or autonomous distributed control adaptive apparatuses), while the NEs 201 to 203 are GMPLS non-adaptive apparatuses (hereinafter, referred to as communication apparatuses or autonomous distributed control non-adaptive apparatuses). The NE 101 to NE 102, NE 103 to NE 105, NE 106 to NE 107 all reside in an autonomous distributed control adaptive network, while the NE 201 to NE 203 all reside in an autonomous distributed control non-adaptive network.

The NMS 1 is a system (network administration apparatus) being an interface between an operator and a network, including a function of requesting each communication apparatus to set or disconnect a path and a function of registering a virtual link for the autonomous distributed control adaptive apparatus. The NMS 1 and the respective communication apparatuses are connected to each other by the management links MLs 1 to 8, through which the respective communication apparatuses are set.

The autonomous distributed control adaptive network shown in Fig. 1 is a network comprising the NEs 101 to 107 that are the autonomous distributed control adaptive apparatuses such as GMPLS or ASON. To set a path in the autonomous distributed control adaptive network, each communication apparatus executes route control and signaling in an autonomous distributed way according to a direction by the operator (see Fig. 17). Then, each communication apparatus reserves a label, sets a switch for the communication apparatus, and sets a path between designated source and destination communication apparatuses.

The autonomous distributed control non-adaptive network shown in Fig. 1 is a network comprising the NE 201 to NE 203 that are the autonomous distributed control non-adaptive apparatuses such as GMPLS or ASON. To set a path in the autonomous distributed control non-adaptive network, the operator designates all resources (ports or time slots, for example) constituting the path, and sets switches for all nodes on a route via the NMS 1 (see Fig. 18). When XC registration is completed for all the communication apparatuses, the path setting is completed.

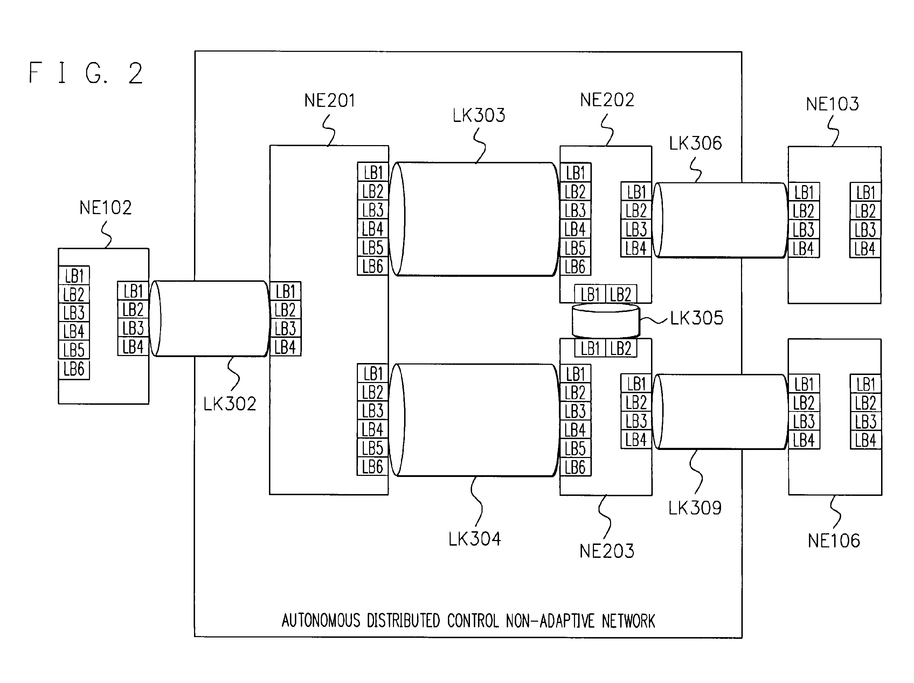

Fig. 2 is a diagram showing links (LKs) and labels (LBs) of the respective communication apparatuses (NEs) in detail. As shown in Fig. 2, a label is an identifier of a resource used by paths.

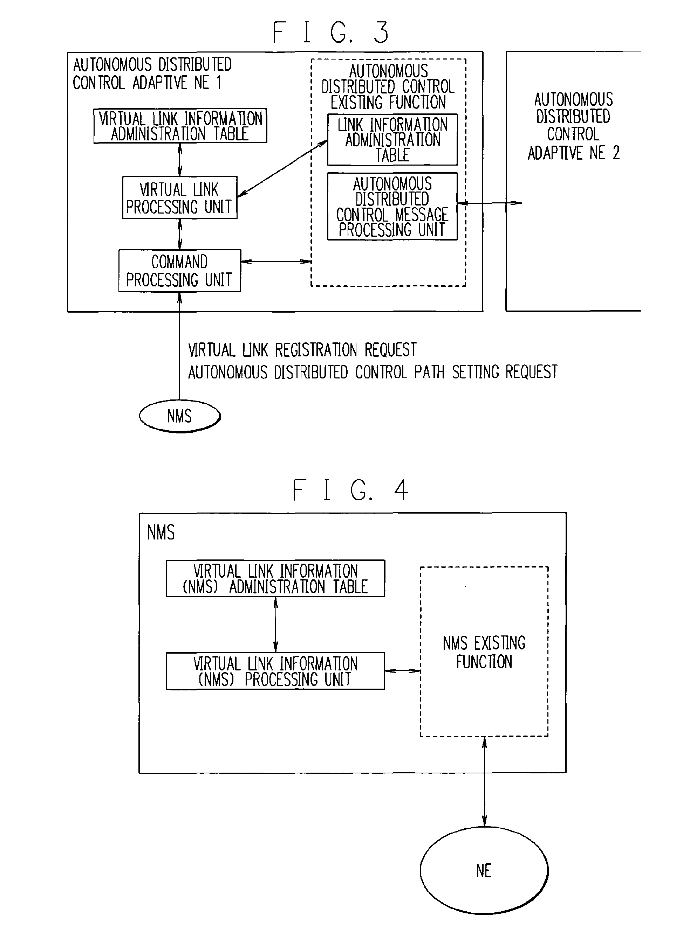

Fig. 3 is a block diagram showing the functional configuration of the autonomous distributed control adaptive apparatuses (NEs 101 to 107). The autonomous distributed control adaptive apparatuses (NEs 101 to 107) include an "autonomous distributed control existing function". The "autonomous distributed control existing function" performs signaling, routing and link administration, for example, using an "autonomous distributed control message processing unit" and a "link information administration table" shown in Fig. 3. The "autonomous distributed control existing function" is well known to those skilled in the art, so its detailed configuration and the description will be omitted. In addition to the "autonomous distributed control existing function", the autonomous distributed control adaptive apparatus includes a "virtual link processing unit", a "virtual link information administration table", and a "command processing unit" for accepting a command (request) by the NMS 1.

Fig. 4 is a block diagram showing the functional configuration of the NMS 1. In addition to an "NMS existing function", the NMS 1 includes a "virtual link information (NMS) administration table" and a "virtual link (NMS) processing unit".

Next, the operation of this exemplary embodiment (one exemplary embodiment of the path setting method according to the present invention) will be described in detail with reference to Figs. 1 and 16. Numerals <1> to <6> in Fig. 1 indicate procedure numbers. According to this exemplary embodiment, the virtual links (NEs 102-103) are set in the autonomous distributed control non-adaptive network, and the virtual links being set are used to set an autonomous distributed control path between the NE 101 and the NE 105.

First, "path setting in autonomous distributed control non-adaptive network" (procedures <1> and <2>) will be described.

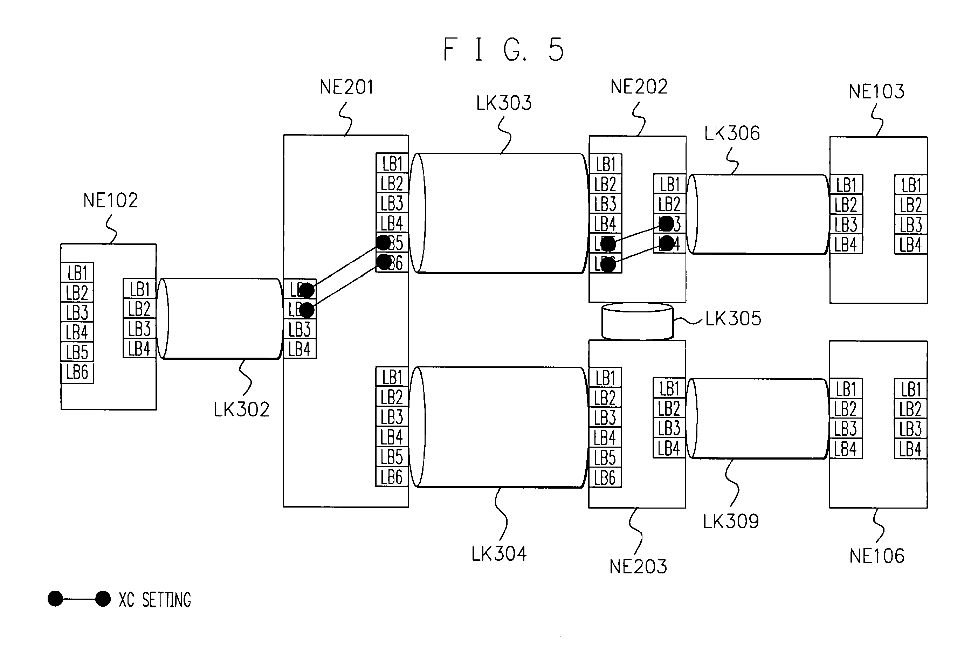

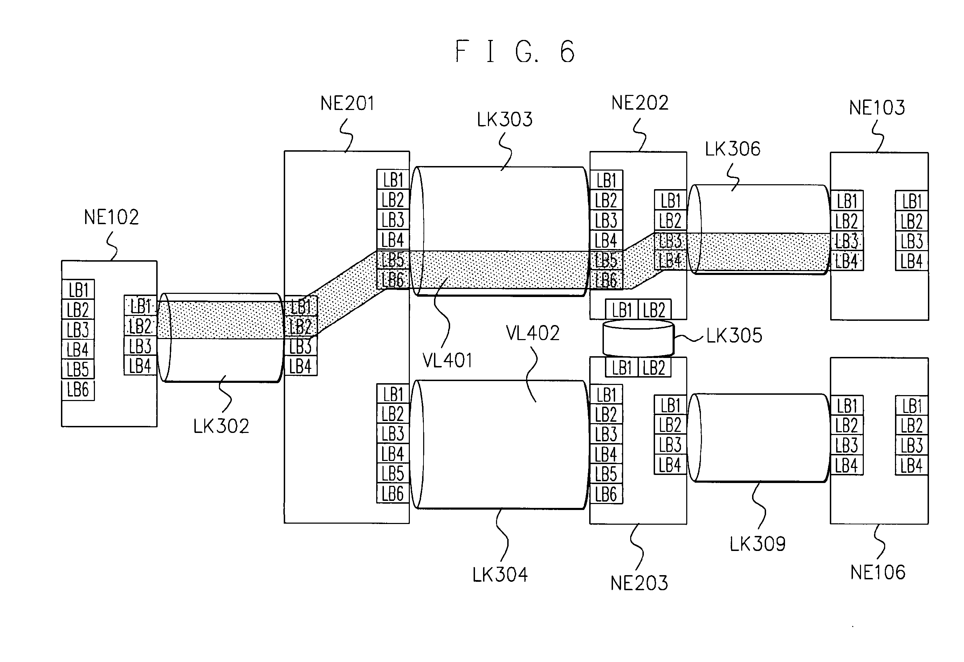

In Fig. 1, the NMS 1 performs the XC registration (procedures <1> and <2>) for each of the communication apparatuses NE 201 and NE 202 in the autonomous distributed control non-adaptive network, and sets a path (NE 201 - NE 202) (step S1 in Fig. 16). Fig. 5 shows an example of the XC registration performed for the NE 201 and NE 202. Fig. 6 shows the path (NE 201 - NE 202) being set.

Next, "virtual link registration" (procedures <3> to <5>) will be described.

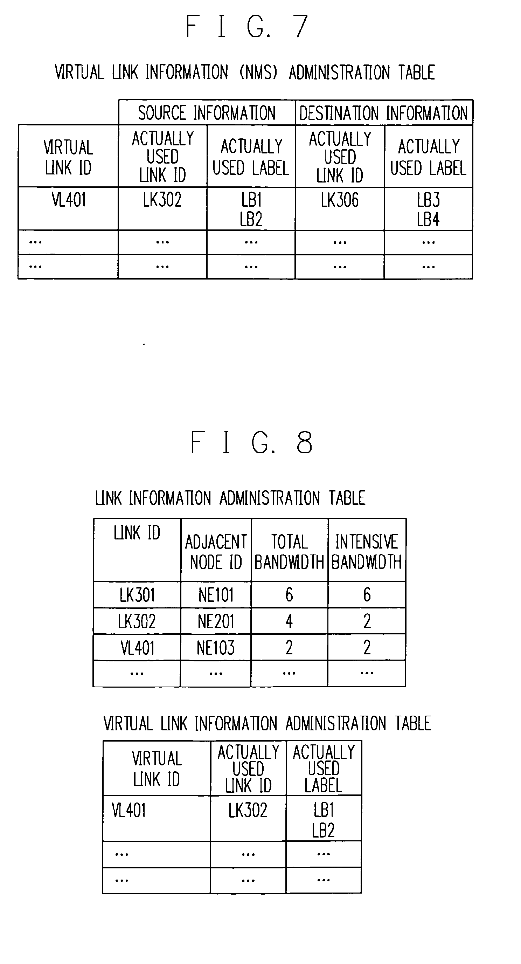

The NMS 1 according to this exemplary embodiment is characterized by including a mechanism for administering the path (NE 201 - NE 202) being set in the autonomous distributed control non-adaptive network as virtual links to create virtual links in the autonomous distributed control non-adaptive network. In the description herein, the NMS 1 administers the path (NE 201 - NE 202) being set in the autonomous distributed control non-adaptive network as virtual links. For this purpose, the NMS 1 registers virtual link information in the "virtual link information (NMS) administration table" shown in Fig. 4 (procedure <3> in Fig. 1, step S2 in Fig. 16). Fig. 7 shows one example after the registration. In the virtual link information, source information and destination information are associated with each virtual link ID (virtual link identity information), as shown in Fig. 7, for example. The source information and the destination information are information of link IDs (actually used link IDs) and labels (actually used labels) of a source and a destination of path to be administered as the virtual link. That is, the NMS 1 will retain information of a link LK 302 and labels LB 1 and LB 2 as source information of a virtual link VL 401, and will retain information of a link LK 306 and labels LB 3 and LB 4 as destination information of the virtual link VL 401. In this manner, the NMS 1 will administer the path (NE 201 - NE 202) as the virtual link VL 401 between the NEs 102-103 by registering the virtual link information shown in Fig. 7.

Next, as shown in procedures <4> and <5>, the NMS 1 transmits the above virtual link information (Fig. 7) to the autonomous distributed control adaptive apparatuses NE 102 and NE 103 and requests them to register the virtual link VL 401 (step S3 in Fig. 16). The present invention does not directly relate to a method for the NMS 1 to administer an autonomous distributed control non-adaptive path or XC, so the detailed configuration will not be described.

When the autonomous distributed control adaptive apparatuses NE 102 and NE 103 receive the virtual link registration request and the virtual link information from the NMS 1, they register the virtual link (step S4 in Fig. 16). The virtual link is registered by the "virtual link processing unit" shown in Fig. 3 in each of the autonomous distributed control adaptive apparatus NE 102 and NE 103.

The following description will be made by taking the NE 102 as an example. The "virtual link processing unit" of the NE 102 records an actually used link ID and an actually used label of the VL 401 in the "virtual link information administration table" shown in Fig. 3 based on source information in the virtual link information received from the NMS 1, as shown in Fig. 8. The "virtual link processing unit" of the NE 102 also records information of the VL 401 (an opposing NE, total bandwidth and remaining bandwidth) in the "link information administration table" shown in Fig. 3, as shown in Fig. 8. Meanwhile, since the VL 401 uses a band for the LK 302 in the NE 102, the "virtual link processing unit" of the NE 102 decreases the remaining bandwidth for the LK 302 by two, i.e., from four to two. For the NE 102, the NE 103 that is the destination of a virtual link is recorded in the opposing NE field.

On the other hand, also in the NE 103, the VL 401 is registered similarly to the NE 102. The "virtual link processing unit" of the NE 103 records an actually used link ID and an actually used label of the VL 401 in the "virtual link information administration table" shown in Fig. 3 based on destination information in the virtual link information received from the NMS 1. The "virtual link processing unit" of the NE 103 also records information of the VL 401 (an opposing NE, total bandwidth and remaining bandwidth) in the "link information administration table" shown in Fig. 3.

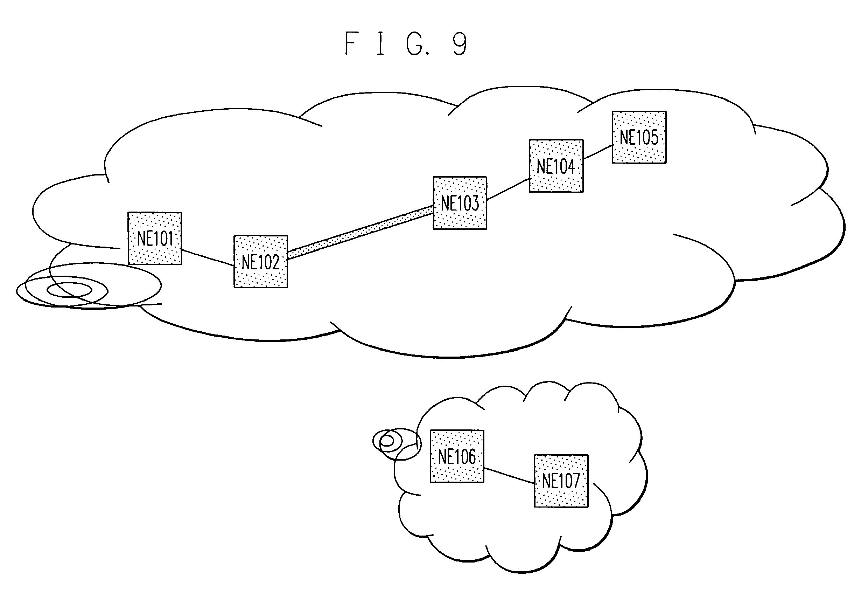

In this manner, the virtual link VL 401 is recorded in the "link information administration table" at the NE 102 and the NE 103 being both end point nodes of the virtual link. The recorded virtual link VL 401 is advertised in the autonomous distributed control network and used for route computation, similarly to a general link (physically connected link). After the virtual link VL 401 is registered, a network recognized by the autonomous distributed control adaptive apparatus has the logical configuration shown in Fig. 9. Based on the configuration, route computation and path setting are performed.

Finally, "autonomous distributed control path setting" (procedure <6>) will be described.

After the virtual link is registered, the NMS 1 transmits a request to set an autonomous distributed control path to the autonomous distributed control adaptive apparatus NE 101 being a source of the path (from the NE 101 to NE 105) which the operator wishes to set (step S5 in Fig. 16). The autonomous distributed control path setting request contains information such as a destination node and bandwidth of the path. The NE 101 receives the autonomous distributed control path setting request and performs route computation and signaling according to a general autonomous distributed control system (see Fig. 17) (step S6 in Fig. 16). In this manner, autonomous distributed control paths are set among NE 101 - NE 102 - NE 201 - NE 202 - NE 103 - NE 104 - NE 105.

As described in the above, according to this exemplary embodiment, the path can be set through the autonomous distributed control in the network including both autonomous distributed control adaptive apparatuses and autonomous distributed control non-adaptive apparatuses. Therefore, even the network including both autonomous distributed control adaptive apparatuses and autonomous distributed control non-adaptive apparatuses can receive benefits of reduction of the operation cost, flexible selection of a path route and providing failure recovery means, for example, as the benefits of the path setting through the autonomous distributed control. It is because the NMS includes the mechanism for handling the paths being set in the autonomous distributed control non-adaptive apparatus as the virtual link, and the autonomous distributed control adaptive apparatus includes the mechanism for handling the virtual link as a normal link.

### [Second Exemplary Embodiment]

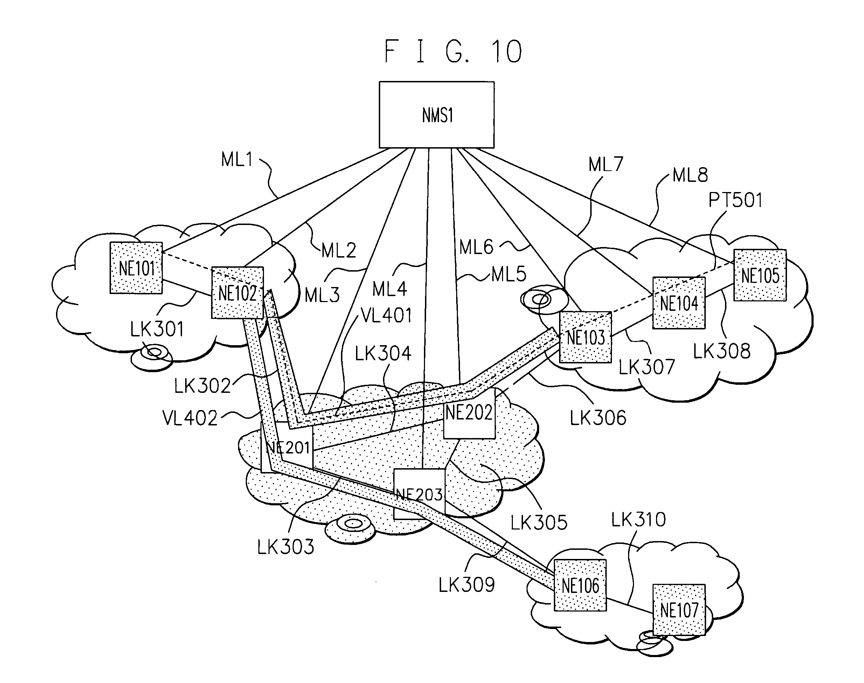

Next, in addition to the state in the first exemplary embodiment described in the above, an exemplary embodiment will be described to register a virtual link NE 102 - NE 201 - NE 203 - NE 106, as shown in Fig. 10.

First, "path setting in autonomous distributed control non-adaptive network" will be described.

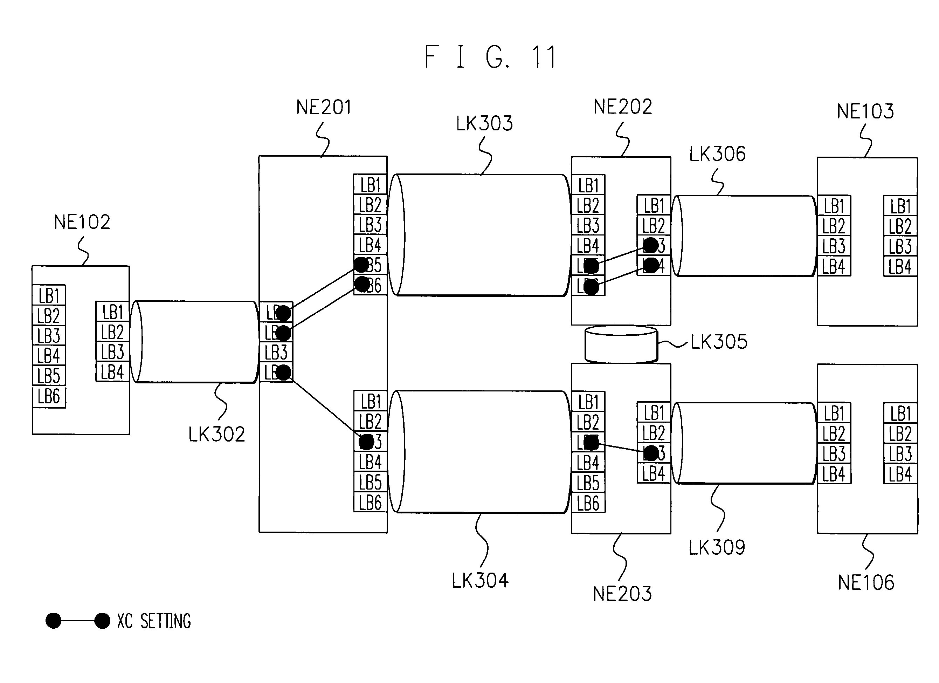

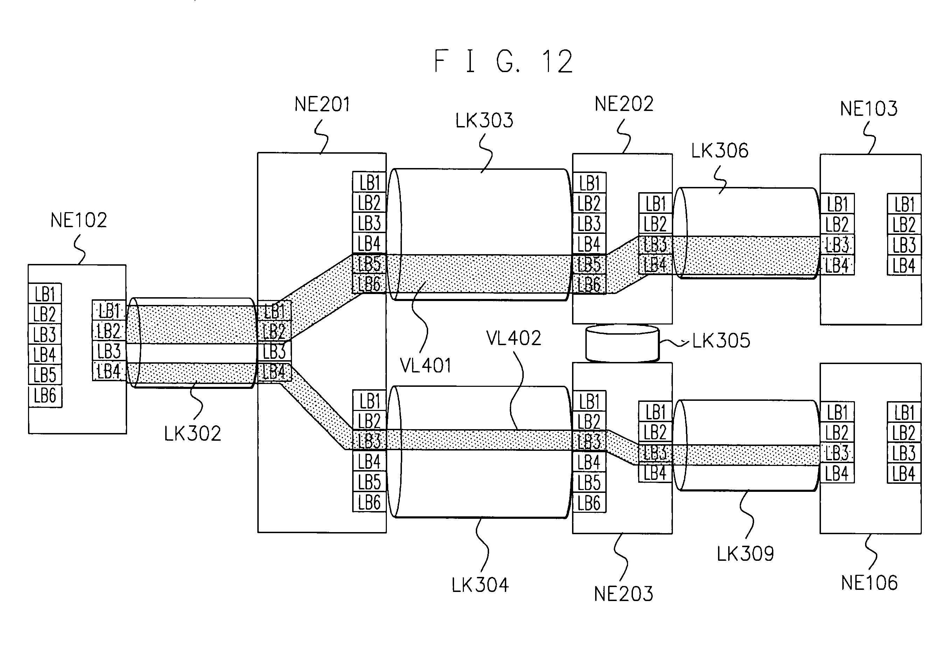

In a method similar to the operation of the first exemplary embodiment described in the above, the NMS 1 performs the XC registration for the respective communication apparatuses NE 201 and NE 203 in the autonomous distributed control non-adaptive network, as shown in Fig. 11. The NMS 1 also sets the paths (NE 201 - NE 203) shown in Fig. 12.

Next, "virtual link registration" will be described.

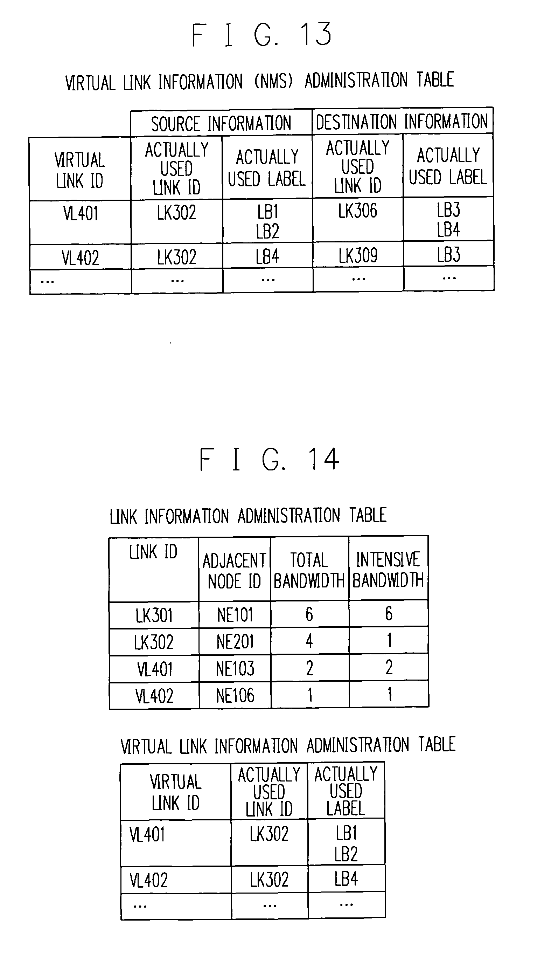

The NMS 1 administers the path (NE 201 - NE 203) being set in the autonomous distributed control non-adaptive network as the virtual link VL 402 among the NEs 102-106 similarly to the above first exemplary embodiment. For this purpose, the NMS 1 registers the virtual link information in the "virtual link information (NMS) administration table" shown in Fig. 4, as shown in Fig. 13. Next, the NMS 1 requests the autonomous distributed control adaptive apparatuses NE 102 and NE 106 to register the virtual link VL 402.

When the autonomous distributed control adaptive apparatuses NE 102 and NE 106 receive the virtual link registration request and virtual link information (Fig. 13) from the NMS 1, they register the virtual link. The virtual link is registered by the "virtual link processing unit" shown in Fig. 3 in each of the autonomous distributed control adaptive apparatuses NE 102 and NE 106.

The following description will be made by taking the NE 102 as an example. The "virtual link processing unit" of the NE 102 records a link ID and a used label of the VL 402 in the "virtual link information administration table" shown in Fig. 3 based on the source information in the virtual link information received from the NMS 1, as shown in Fig. 14. The "virtual link processing unit" of the NE 102 also records information of the VL 402 (an opposing NE, total bandwidth and remaining bandwidth) in the "link information administration table" shown in Fig. 3, as shown in Fig. 14. Meanwhile, since the VL 402 uses a band for the LK 302 in the NE 102 with referring to Fig. 14, the "virtual link processing unit" of the NE 102 decreases the remaining bandwidth for the LK 302 by one, i.e., from two to one, and updates the information administration table.

On the other hand, also in the NE 106, the "virtual link processing unit" registers the VL 402 based on the destination information in the virtual link information received from the NMS 1, similarly to the NE 102.

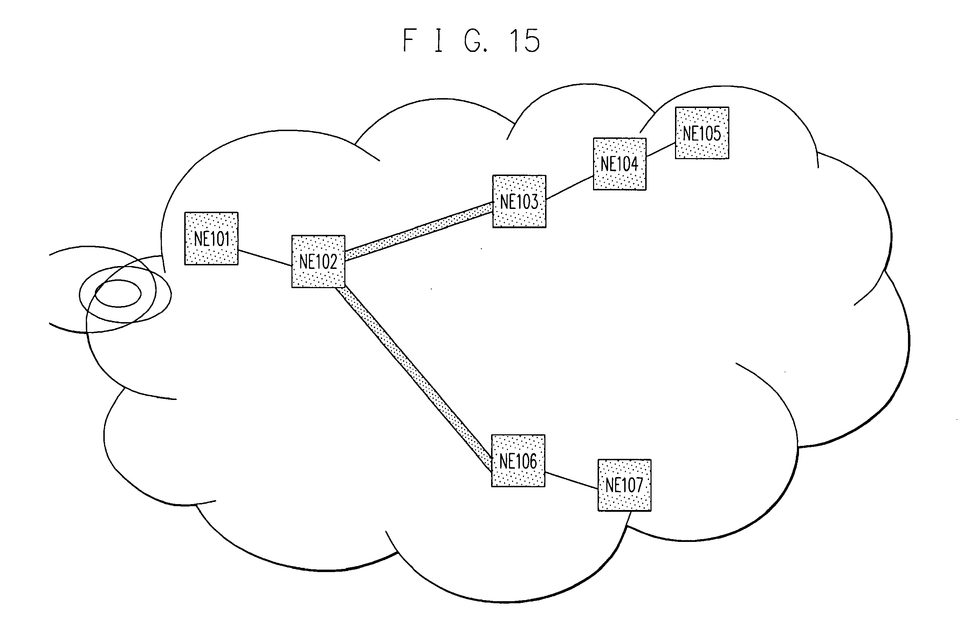

After both the NE 102 and the NE 106 being both end point nodes of the virtual link record the virtual link VL 402, the autonomous distributed control network has the logical configuration shown in Fig. 15. Then, based on the configuration, the route computation and path setting are performed.

### [Third Exemplary Embodiment]

According to the above first and second exemplary embodiments, the NMS 1 previously performs the XC registration for the autonomous distributed control non-adaptive apparatuses NE 201 to NE 203 to register the virtual link, so that the autonomous distributed control realizes the path setting. According to this exemplary embodiment, in addition to the above, the NMS 1 can previously perform the XC registration for each of the autonomous distributed control adaptive apparatuses NEs 101 to 107 to register the virtual link. The configuration and operation of this exemplary embodiment are basically similar to those of the above first and second exemplary embodiments, so they will not be further described herein. This exemplary embodiment has effects in that the link information advertised in the autonomous distributed control network decreases, and the scalability of the autonomous distributed control network improves.

### [Fourth Exemplary Embodiment]

The above first to third exemplary embodiments have described the case in that the autonomous distributed control non-adaptive path is set as part of the autonomous distributed control adaptive path based on the information indicating the autonomous distributed control non-adaptive path being set in the autonomous distributed control non-adaptive network. On the contrary, the autonomous distributed control adaptive path can be set as part of the autonomous distributed control non-adaptive path based on the information indicating an autonomous distributed control adaptive path being set in the autonomous distributed control adaptive network.

The control operation according to the exemplary embodiments described in the above may be executed in hardware or software or a combination of the both.

To execute the software processing, a program recording a processing sequence on it may be installed to a memory in a computer embedded in dedicated hardware for execution, or the program may be installed to a general-purpose computer that can execute various processing for execution.

For example, the program may be previously recorded in a hard disk or a ROM (Read Only Memory) as a recording medium. Alternatively, the program may be temporally or persistently stored (recorded) in a removable recording medium such as a floppy (R) disc, a CD-ROM (Compact Disc Read Only Memory), an MO (Magneto optical) disc, a DVD (Digital Versatile Disc), a magnetic disc, or a semiconductor memory.

Such a removable recording medium can be provided as so-called packaged software.

The program is not only installed from the removable recording medium as described in the above to the computer, but also wirelessly transferred from a download site to the computer, or transferred to the computer via a network such as a LAN (Local Area Network) or the Internet through wired connection. The computer can receive the transferred program and install the program to a recording medium such as a built-in hard disk.

Additionally, the program is not only executed time-sequentially according to the processing operation described in relation to the above exemplary embodiments, but may also be constructed so as to be executed in parallel or independently depending on the throughput of an apparatus for executing the processing, or as necessary.

Furthermore, the system described in relation to the above exemplary embodiments can be configured as a logical group of a plurality of apparatuses, or constructed so as to include functions of the respective apparatuses.

The respective exemplary embodiments described in the above are preferable exemplary embodiments of the present invention. They are not intended to limit the scope of the present invention only to the above exemplary embodiments, but those skilled in the art can modify or alter the exemplary embodiments in the above to implement exemplary embodiments with various changes without deviating from the subject of the present invention.

An example 1 is a network system including: both an autonomous distributed control adaptive network and an autonomous distributed control non-adaptive network; and a network administration apparatus that can set predetermined paths in the autonomous distributed control adaptive network and the autonomous distributed control non-adaptive network, wherein the network administration apparatus sets an autonomous distributed control non-adaptive path as part of an autonomous distributed control adaptive path based on information indicating the autonomous distributed control non-adaptive path being set in the autonomous distributed control non-adaptive network.

An example 2 is the network system according to the example 1, wherein: the network administration apparatus includes: an autonomous distributed control non-adaptive path setting request unit for requesting an autonomous distributed control non-adaptive apparatus on the autonomous distributed control non-adaptive network to set the autonomous distributed control non-adaptive path; a virtual link information administration unit for administering the autonomous distributed control non-adaptive path being set in the autonomous distributed control non-adaptive network as a virtual link, and retaining virtual link information indicating the virtual link; a virtual link registration request unit for requesting an autonomous distributed control adaptive apparatus on the autonomous distributed control adaptive network to transmit the virtual link information and register the autonomous distributed control non-adaptive path as the virtual link; and an autonomous distributed control adaptive path setting request unit for requesting an autonomous distributed control adaptive apparatus being a source of an autonomous distributed control adaptive path containing the virtual link among autonomous distributed control adaptive apparatuses on the autonomous distributed control adaptive network to which the autonomous distributed control adaptive apparatus that has received the request from the virtual link registration request unit belongs to set the autonomous distributed control adaptive path, and the autonomous distributed control adaptive apparatus includes: a virtual link registration unit for, when receiving the request from the virtual link registration request unit, registering the autonomous distributed control non-adaptive path as the virtual link based on the virtual link information; and an autonomous distributed control adaptive path setting unit for, when receiving the request from the autonomous distributed control adaptive path setting request unit, setting an autonomous distributed control adaptive path containing the virtual link.

An example 3 is a network system including: both an autonomous distributed control adaptive network and an autonomous distributed control non-adaptive network; and a network administration apparatus that can set predetermined paths in the autonomous distributed control adaptive network and the autonomous distributed control non-adaptive network, wherein the network administration apparatus sets an autonomous distributed control adaptive path as part of an autonomous distributed control non-adaptive path based on information indicating the autonomous distributed control adaptive path being set in the autonomous distributed control adaptive network.

An example 4 is the network system according to the example 3, wherein: the network administration apparatus includes: an autonomous distributed control adaptive path setting request unit for requesting an autonomous distributed control adaptive apparatus on the autonomous distributed control adaptive network to set the autonomous distributed control adaptive path; a virtual link information administration unit for administering the autonomous distributed control adaptive path being set in the autonomous distributed control adaptive network as a virtual link, and retaining virtual link information indicating said virtual link; a virtual link registration request unit for requesting an autonomous distributed control non-adaptive apparatus on the autonomous distributed control non-adaptive network to transmit the virtual link information and register the autonomous distributed control adaptive path as the virtual link; and an autonomous distributed control non-adaptive path setting request unit for requesting a predetermined autonomous distributed control non-adaptive apparatus on the autonomous distributed control non-adaptive network to which the autonomous distributed control non-adaptive apparatus that has received the request from the virtual link registration request unit belongs to the an autonomous distributed control non-adaptive path containing the virtual link, and the autonomous distributed control non-adaptive apparatus includes: a virtual link registration unit for, when receiving the request from the virtual link registration request unit, registering the autonomous distributed control adaptive path as the virtual link based on the virtual link information; and an autonomous distributed control non-adaptive path setting unit for, when receiving the request from the autonomous distributed control non-adaptive path setting request unit, setting an autonomous distributed control non-adaptive path containing the virtual link.

An example 5 is a network administration apparatus for setting an autonomous distributed control non-adaptive path as part of an autonomous distributed control adaptive path based on information indicating the autonomous distributed control non-adaptive path being set in an autonomous distributed control non-adaptive network if there are both an autonomous distributed control adaptive network and the autonomous distributed control non-adaptive network.

An example 6 is the network administration apparatus according to the example 5 including: an autonomous distributed control non-adaptive path setting request unit for requesting an autonomous distributed control non-adaptive apparatus on the autonomous distributed control non-adaptive network to set the autonomous distributed control non-adaptive path; a virtual link information administration unit for administering the autonomous distributed control non-adaptive path being set in the autonomous distributed control non-adaptive network as a virtual link, and retaining virtual link information indicating the virtual link; a virtual link registration request unit for requesting an autonomous distributed control adaptive apparatus on the autonomous distributed control adaptive network to transmit the virtual link information and register the autonomous distributed control non-adaptive path as the virtual link; and an autonomous distributed control adaptive path setting request unit for requesting an autonomous distributed control adaptive apparatus being a source of an autonomous distributed control adaptive path containing the virtual link among autonomous distributed control adaptive apparatuses on the autonomous distributed control adaptive network to which the autonomous distributed control adaptive apparatus that has received the request from the virtual link registration request unit belongs to set the autonomous distributed control adaptive path.

An example 7 is the network administration apparatus according to the example 6, wherein the virtual link information administration unit retains: virtual link identity information to identify the virtual link; source information of a source of the autonomous distributed control non-adaptive path to be administered as the virtual link; and destination information of a destination of the autonomous distributed control non-adaptive path to be administered as the virtual link, as the virtual link information in association with one another.

An example 8 is the network administration apparatus according to the example 7, wherein: the source information are source link information indicating a link of the source, and source label information indicating a resource used by the source; and the destination information is destination link information indicating a link of the destination, and destination label information indicating a resource used by the destination.

An example 9 is a network administration apparatus for setting an autonomous distributed control adaptive path as part of an autonomous distributed control non-adaptive path based on information indicating the autonomous distributed control adaptive path being set in an autonomous distributed control adaptive network if there are both the autonomous distributed control adaptive network and an autonomous distributed control non-adaptive network.

An example 10 is the network administration apparatus according to the example 9 including: an autonomous distributed control adaptive path setting request unit for requesting an autonomous distributed control adaptive apparatus on the autonomous distributed control adaptive network to set the autonomous distributed control adaptive path; a virtual link information administration unit for administering the autonomous distributed control adaptive path being set in the autonomous distributed control adaptive network as a virtual link, and retaining virtual link information indicating the virtual link; a virtual link registration request unit for requesting an autonomous distributed control non-adaptive apparatus on the autonomous distributed control non-adaptive network to transmit the virtual link information and register the autonomous distributed control adaptive path as the virtual link; and an autonomous distributed control non-adaptive path setting request unit for requesting a predetermined autonomous distributed control non-adaptive apparatus on the autonomous distributed control non-adaptive network to which the autonomous distributed control non-adaptive apparatus that has received the request from the virtual link registration request unit belongs to set the autonomous distributed control non-adaptive path containing the virtual link.

An example 11 is a communication apparatus being arranged in an autonomous distributed control adaptive network and adapted to autonomous distributed control, including: a virtual link registration unit that is requested by a network administration apparatus to register an autonomous distributed control non-adaptive path being set in an autonomous distributed control non-adaptive network as a virtual link, and, when receiving virtual link information indicating the virtual link, that registers the autonomous distributed control non-adaptive path as the virtual link based on the virtual link information; and an autonomous distributed control adaptive path setting unit that sets an autonomous distributed control adaptive path containing the virtual link, when requested by the network administration apparatus to set an autonomous distributed control adaptive path.

An example 12 is the communication apparatus according to the example 11, wherein the virtual link registration unit registers the virtual link by storing the virtual link information received from the network administration apparatus, and storing an opposing autonomous distributed control adaptive apparatus, total bandwidth and remaining bandwidth as information of the virtual link.

An example 13 is the communication apparatus according to the example 11 or 12, wherein said virtual link recorded by the virtual link registration unit is advertised in the autonomous distributed control network, and used for route computation by the autonomous distributed control adaptive path setting unit similarly to a physically connected link.

An example 14 is the communication apparatus according to any one of examples 11 to 13, wherein the autonomous distributed control adaptive path setting unit, when requested by the network administration apparatus to set the autonomous distributed control adaptive path, sets the autonomous distributed control adaptive path by performing the route computation and signaling based on information indicating an autonomous distributed control adaptive apparatus being a destination of the autonomous distributed control adaptive path and information indicating bandwidth of the autonomous distributed control adaptive path contained in the request.

An example 15 is a communication apparatus being arranged in an autonomous distributed control non-adaptive network and not adapted to autonomous distributed control, including: a virtual link registration unit that is requested by a network administration apparatus to register an autonomous distributed control adaptive path being set in an autonomous distributed control adaptive network as a virtual link, and, when receiving virtual link information indicating the virtual link, that registers the autonomous distributed control adaptive path as the virtual link based on the virtual link information; and an autonomous distributed control non-adaptive path setting unit that sets an autonomous distributed control non-adaptive path containing the virtual link, when requested by the network administration apparatus to set an autonomous distributed control non-adaptive path.

An example 16 is a path setting method of setting an autonomous distributed control non-adaptive path as part of an autonomous distributed control adaptive path based on information indicating the autonomous distributed control non-adaptive path being set in an autonomous distributed control non-adaptive network if there are both an autonomous distributed control adaptive network and the autonomous distributed control non-adaptive network.

An example 17 is the path setting method according to the example 16 including: a step of requesting an autonomous distributed control non-adaptive apparatus on the autonomous distributed control non-adaptive network to set the autonomous distributed control non-adaptive path; a step of registering virtual link information indicating a virtual link to administer the autonomous distributed control non-adaptive path being set in the autonomous distributed control non-adaptive network as the virtual link; a step of requesting an autonomous distributed control adaptive apparatus on the autonomous distributed control adaptive network to transmit the virtual link information and register the autonomous distributed control non-adaptive path as the virtual link; and a step of requesting an autonomous distributed control adaptive apparatus being a source of an autonomous distributed control adaptive path containing the virtual link among autonomous distributed control adaptive apparatuses on the autonomous distributed control adaptive network to which the autonomous distributed control adaptive apparatus that has received the request to register the virtual link belongs to set the autonomous distributed control adaptive path.

An example 18 is a path setting method of setting an autonomous distributed control adaptive path as part of an autonomous distributed control non-adaptive path based on information indicating the autonomous distributed control adaptive path being set in an autonomous distributed control adaptive network if there are both the autonomous distributed control adaptive network and an autonomous distributed control non-adaptive network.

An example 19 is the path setting method according to the example 18 including: a step of requesting an autonomous distributed control adaptive apparatus on the autonomous distributed control adaptive network to set the autonomous distributed control adaptive path; a step of registering virtual link information indicating a virtual link to administer the autonomous distributed control adaptive path being set in the autonomous distributed control adaptive network as the virtual link; a step of requesting an autonomous distributed control non-adaptive apparatus on said autonomous distributed control non-adaptive network to transmit the virtual link information and register the autonomous distributed control adaptive path as the virtual link; and a step of requesting a predetermined autonomous distributed control non-adaptive apparatus on the autonomous distributed control non-adaptive network to which the autonomous distributed control non-adaptive apparatus that has received the request to register the virtual link belongs to set an autonomous distributed control non-adaptive path containing the virtual link.

An example 20 is a path setting method including: a step of being requested by a network administration apparatus to register an autonomous distributed control non-adaptive path being set in an autonomous distributed control non-adaptive network as a virtual link, and if virtual link information indicating the virtual link is received, registering the autonomous distributed control non-adaptive path as the virtual link based on the virtual link information; and a step of setting an autonomous distributed control adaptive path containing the virtual link if it is requested by the network administration apparatus to set an autonomous distributed control adaptive path.

An example 21 is a path setting method including: a step of being requested by a network administration apparatus to register an autonomous distributed control adaptive path being set in an autonomous distributed control adaptive network as a virtual link, and if virtual link information indicating the virtual link is received, registering the autonomous distributed control adaptive path as the virtual link based on the virtual link information; and a step of setting an autonomous distributed control non-adaptive path containing the virtual link if it is requested by the network administration apparatus to set an autonomous distributed control non-adaptive path.

An example 22 is a program causing a computer to execute the path setting method according to any one of examples 16 to 21.

## Claims

1. A network system including:
both an autonomous distributed control adaptive network and an autonomous distributed control non-adaptive network; and
a network administration apparatus that can set predetermined paths in the autonomous distributed control adaptive network and the autonomous distributed control non-adaptive network, wherein
the network administration apparatus is operable to set an autonomous distributed control non-adaptive path as part of an autonomous distributed control adaptive path based on information indicating the autonomous distributed control non-adaptive path being set in the autonomous distributed control non-adaptive network.

2. The network system according to claim 1, wherein:
the network administration apparatus includes:
an autonomous distributed control non-adaptive path setting request unit for requesting an autonomous distributed control non-adaptive apparatus on the autonomous distributed control non-adaptive network to set the autonomous distributed control non-adaptive path;
a virtual link information administration unit for administering the autonomous distributed control non-adaptive path being set in the autonomous distributed control non-adaptive network as a virtual link, and retaining virtual link information indicating the virtual link;
a virtual link registration request unit for requesting an autonomous distributed control adaptive apparatus on the autonomous distributed control adaptive network to transmit the virtual link information and register the autonomous distributed control non-adaptive path as the virtual link; and
an autonomous distributed control adaptive path setting request unit for requesting an autonomous distributed control adaptive apparatus being a source of an autonomous distributed control adaptive path containing the virtual link among autonomous distributed control adaptive apparatuses on the autonomous distributed control adaptive network to which the autonomous distributed control adaptive apparatus that has received the request from the virtual link registration request unit belongs to set the autonomous distributed control adaptive path, and
the autonomous distributed control adaptive apparatus includes:
a virtual link registration unit for, when receiving the request from the virtual link registration request unit, registering the autonomous distributed control non-adaptive path as the virtual link based on the virtual link information; and
an autonomous distributed control adaptive path setting unit for, when receiving the request from the autonomous distributed control adaptive path setting request unit, setting an autonomous distributed control adaptive path containing the virtual link.

3. A network system including:
both an autonomous distributed control adaptive network and an autonomous distributed control non-adaptive network; and
a network administration apparatus that can set predetermined paths in the autonomous distributed control adaptive network and the autonomous distributed control non-adaptive network, wherein the network administration apparatus is operable to set an autonomous distributed control adaptive path as part of an autonomous distributed control non-adaptive path based on information indicating the autonomous distributed control adaptive path being set in the autonomous distributed control adaptive network.

4. The network system according to claim 3, wherein:
the network administration apparatus includes:
an autonomous distributed control adaptive path setting request unit for requesting an autonomous distributed control adaptive apparatus on the autonomous distributed control adaptive network to set the autonomous distributed control adaptive path;
a virtual link information administration unit for administering the autonomous distributed control adaptive path being set in the autonomous distributed control adaptive network as a virtual link, and retaining virtual link information indicating said virtual link;
a virtual link registration request unit for requesting an autonomous distributed control non-adaptive apparatus on the autonomous distributed control non-adaptive network to transmit the virtual link information and register the autonomous distributed control adaptive path as the virtual link; and
an autonomous distributed control non-adaptive path setting request unit for requesting a predetermined autonomous distributed control non-adaptive apparatus on the autonomous distributed control non-adaptive network to which the autonomous distributed control non-adaptive apparatus that has received the request from the virtual link registration request unit belongs to the an autonomous distributed control non-adaptive path containing the virtual link, and
the autonomous distributed control non-adaptive apparatus includes:
a virtual link registration unit for, when receiving the request from the virtual link registration request unit, registering the autonomous distributed control adaptive path as the virtual link based on the virtual link information; and
an autonomous distributed control non-adaptive path setting unit for, when receiving the request from the autonomous distributed control non-adaptive path setting request unit, setting an autonomous distributed control non-adaptive path containing the virtual link.

5. A network administration apparatus for setting an autonomous distributed control non-adaptive path as part of an autonomous distributed control adaptive path based on information indicating the autonomous distributed control non-adaptive path being set in an autonomous distributed control non-adaptive network if there are both an autonomous distributed control adaptive network and the autonomous distributed control non-adaptive network.

6. The network administration apparatus according to claim 5 including:
an autonomous distributed control non-adaptive path setting request unit for requesting an autonomous distributed control non-adaptive apparatus on the autonomous distributed control non-adaptive network to set the autonomous distributed control non-adaptive path;
a virtual link information administration unit for administering the autonomous distributed control non-adaptive path being set in the autonomous distributed control non-adaptive network as a virtual link, and retaining virtual link information indicating the virtual link;
a virtual link registration request unit for requesting an autonomous distributed control adaptive apparatus on the autonomous distributed control adaptive network to transmit the virtual link information and register the autonomous distributed control non-adaptive path as the virtual link; and
an autonomous distributed control adaptive path setting request unit for requesting an autonomous distributed control adaptive apparatus being a source of an autonomous distributed control adaptive path containing the virtual link among autonomous distributed control adaptive apparatuses on the autonomous distributed control adaptive network to which the autonomous distributed control adaptive apparatus that has received the request from the virtual link registration request unit belongs to set the autonomous distributed control adaptive path.

7. The network administration apparatus according to claim 6,
wherein the virtual link information administration unit is operable to retain:
virtual link identity information to identify the virtual link;
source information of a source of the autonomous distributed control non-adaptive path to be administered as the virtual link; and
destination information of a destination of the autonomous distributed control non-adaptive path to be administered as the virtual link,
as the virtual link information in association with one another.

8. The network administration apparatus according to claim 7,
wherein:
the source information are source link information indicating a link of the source, and source label information indicating a resource used by the source; and
the destination information is destination link information indicating a link of the destination, and destination label information indicating a resource used by the destination.

9. A network administration apparatus for setting an autonomous distributed control adaptive path as part of an autonomous distributed control non-adaptive path based on information indicating the autonomous distributed control adaptive path being set in an autonomous distributed control adaptive network if there are both the autonomous distributed control adaptive network and an autonomous distributed control non-adaptive network.

10. The network administration apparatus according to claim 9 including:
an autonomous distributed control adaptive path setting request unit for requesting an autonomous distributed control adaptive apparatus on the autonomous distributed control adaptive network to set the autonomous distributed control adaptive path;
a virtual link information administration unit for administering the autonomous distributed control adaptive path being set in the autonomous distributed control adaptive network as a virtual link, and retaining virtual link information indicating the virtual link;
a virtual link registration request unit for requesting an autonomous distributed control non-adaptive apparatus on the autonomous distributed control non-adaptive network to transmit the virtual link information and register the autonomous distributed control adaptive path as the virtual link; and
an autonomous distributed control non-adaptive path setting request unit for requesting a predetermined autonomous distributed control non-adaptive apparatus on the autonomous distributed control non-adaptive network to which the autonomous distributed control non-adaptive apparatus that has received the request from the virtual link registration request unit belongs to set the autonomous distributed control non-adaptive path containing the virtual link.

11. A communication apparatus being arranged in an autonomous distributed control adaptive network and adapted to autonomous distributed control, including:
a virtual link registration unit that is requested by a network administration apparatus to register an autonomous distributed control non-adaptive path being set in an autonomous distributed control non-adaptive network as a virtual link, and, when receiving virtual link information indicating the virtual link, that registers the autonomous distributed control non-adaptive path as the virtual link based on the virtual link information; and
an autonomous distributed control adaptive path setting unit that is operable to set an autonomous distributed control adaptive path containing the virtual link, when requested by the network administration apparatus to set an autonomous distributed control adaptive path.

12. The communication apparatus according to claim 11,
wherein the virtual link registration unit for registering the virtual link by storing the virtual link information received from the network administration apparatus, and for storing an opposing autonomous distributed control adaptive apparatus, total bandwidth and remaining bandwidth as information of the virtual link.

13. The communication apparatus according to claim 11 or 12,
wherein said virtual link recorded by the virtual link registration unit is advertised in the autonomous distributed control network, and used for route computation by the autonomous distributed control adaptive path setting unit similarly to a physically connected link.

14. The communication apparatus according to any one of claims 11 to 13, wherein the autonomous distributed control adaptive path setting unit, when requested by the network administration apparatus to set the autonomous distributed control adaptive path, is operable to set the autonomous distributed control adaptive path by performing the route computation and signaling based on information indicating an autonomous distributed control adaptive apparatus being a destination of the autonomous distributed control adaptive path and information indicating bandwidth of the autonomous distributed control adaptive path contained in the request.

15. A communication apparatus being arranged in an autonomous distributed control non-adaptive network and not adapted to autonomous distributed control, including:
a virtual link registration unit that is requested by a network administration apparatus to register an autonomous distributed control adaptive path being set in an autonomous distributed control adaptive network as a virtual link, and, when receiving virtual link information indicating the virtual link, that registers the autonomous distributed control adaptive path as the virtual link based on the virtual link information; and
an autonomous distributed control non-adaptive path setting unit that sets an autonomous distributed control non-adaptive path containing the virtual link, when requested by the network administration apparatus to set an autonomous distributed control non-adaptive path.

16. A path setting method of setting an autonomous distributed control non-adaptive path as part of an autonomous distributed control adaptive path based on information indicating the autonomous distributed control non-adaptive path being set in an autonomous distributed control non-adaptive network if there are both an autonomous distributed control adaptive network and the autonomous distributed control non-adaptive network.

17. The path setting method according to claim 16 including:
a step of requesting an autonomous distributed control non-adaptive apparatus on the autonomous distributed control non-adaptive network to set the autonomous distributed control non-adaptive path;
a step of registering virtual link information indicating a virtual link to administer the autonomous distributed control non-adaptive path being set in the autonomous distributed control non-adaptive network as the virtual link;
a step of requesting an autonomous distributed control adaptive apparatus on the autonomous distributed control adaptive network to transmit the virtual link information and register the autonomous distributed control non-adaptive path as the virtual link; and
a step of requesting an autonomous distributed control adaptive apparatus being a source of an autonomous distributed control adaptive path containing the virtual link among autonomous distributed control adaptive apparatuses on the autonomous distributed control adaptive network to which the autonomous distributed control adaptive apparatus that has received the request to register the virtual link belongs to set the autonomous distributed control adaptive path.

18. A path setting method of setting an autonomous distributed control adaptive path as part of an autonomous distributed control non-adaptive path based on information indicating the autonomous distributed control adaptive path being set in an autonomous distributed control adaptive network if there are both the autonomous distributed control adaptive network and an autonomous distributed control non-adaptive network.

19. The path setting method according to claim 18 including:
a step of requesting an autonomous distributed control adaptive apparatus on the autonomous distributed control adaptive network to set the autonomous distributed control adaptive path;
a step of registering virtual link information indicating a virtual link to administer the autonomous distributed control adaptive path being set in the autonomous distributed control adaptive network as the virtual link;
a step of requesting an autonomous distributed control non-adaptive apparatus on said autonomous distributed control non-adaptive network to transmit the virtual link information and register the autonomous distributed control adaptive path as the virtual link; and
a step of requesting a predetermined autonomous distributed control non-adaptive apparatus on the autonomous distributed control non-adaptive network to which the autonomous distributed control non-adaptive apparatus that has received the request to register the virtual link belongs to set an autonomous distributed control non-adaptive path containing the virtual link.

20. A path setting method including:
a step of being requested by a network administration apparatus to register an autonomous distributed control non-adaptive path being set in an autonomous distributed control non-adaptive network as a virtual link, and if virtual link information indicating the virtual link is received, registering the autonomous distributed control non-adaptive path as the virtual link based on the virtual link information; and
a step of setting an autonomous distributed control adaptive path containing the virtual link if it is requested by the network administration apparatus to set an autonomous distributed control adaptive path.

21. A path setting method including:
a step of being requested by a network administration apparatus to register an autonomous distributed control adaptive path being set in an autonomous distributed control adaptive network as a virtual link, and if virtual link information indicating the virtual link is received, registering the autonomous distributed control adaptive path as the virtual link based on the virtual link information; and
a step of setting an autonomous distributed control non-adaptive path containing the virtual link if it is requested by the network administration apparatus to set an autonomous distributed control non-adaptive path.

22. A program causing a computer to execute the path setting method according to any one of claims 16 to 21.
